(19) Europäisches Patentamt

European Patent Office

Office européen des brevets

(11) Veröffentlichungsnummer: **0 200 085**
**B1**

(12) **EUROPÄISCHE PATENTSCHRIFT**

(45) Veröffentlichungstag der Patentschrift:
**24.08.88**

(21) Anmeldenummer: **86105148.0**

(22) Anmeldetag: **15.04.86**

(51) Int. Cl.⁴: **B 65 G 69/28**

(54) **Überfahrbrücke für Rampen.**

(30) Priorität: **22.04.85 DE 3514468**

(43) Veröffentlichungstag der Anmeldung:
**05.11.86 Patentblatt 86/45**

(45) Bekanntmachung des Hinweises auf die Patenterteilung:
**24.08.88 Patentblatt 88/34**

(84) Benannte Vertragsstaaten:
**AT BE CH DE FR GB IT LI LU NL SE**

(56) Entgegenhaltungen:
**DE - A - 2 735 552**

(73) Patentinhaber: **Alten, Kurt, Ringstrasse 14,
D-3015 Wennigsen (DE)**

(72) Erfinder: **Alten, Kurt, Ringstrasse 14, D-3015 Wennigsen
(DE)**

(74) Vertreter: **Depmeyer, Lothar, Auf der Höchte 30,
D-3008 Garbsen 1 (DE)**

**Beschreibung**

Die Erfindung betrifft eine Überfahrbrücke für Rampen mit einer schwenkbaren Brückenplatte, deren vorderer Abschnitt gegenüber dem hinteren Teil um eine waagrechte Achse verschwenkbar ist, wobei der hintere Teil der Brückenplatte in der Ruhestellung der Brücke etwa senkrecht nach oben ansteht und der Abschnitt der Brückenplatte etwa waagrecht angeordnet ist und wobei ferner in der Wirkstellung der Brücke der Abschnitt und der hintere Teil fluchten und die Brückenplatte insgesamt im wesentlichen waagrecht angeordnet ist.

Bei bekannten Überfahrbrücken dieser Ausführung ist der erwähnte vordere Abschnitt am hinteren Teil der Brückenplatte durch Lenker zwangsgeführt. Dadurch ist zwar eine genaue Führung des Abschnittes sichergestellt, jedoch erfordert das Lenkergestänge einen nicht unerheblichen technischen Aufwand und eine ständige Pflege seiner Gelenke.

Aufgrund der Erfindung sollen diese Nachteile beseitigt werden; es soll eine wesentliche Vereinfachung der Lagerung des vorderen Abschnittes erzielt werden.

Aufgrund der Erfindung ist der vordere Abschnitt frei schwenkbar gelagert und in der Ruhestellung der Brücke durch einen Anschlag am hinteren Teil der Brückenplatte unterfangen. Zweckmässigerweise ist dabei der vorne liegende Abschnitt am freien Ende gleit- und abrollfähig ausgeführt.

Die Erfindung geht von der Überlegung aus, dass der hintere Teil der Brückenplatte durch hydraulische Zylinder oder ähnliche Schwenkmittel von der senkrechten Ruhestellung aus in die etwa waagrechte Wirklage, durch diese Mittel aber vorwiegend von der etwa waagrechten Wirklage in die etwa senkrechte Ruhestellung verschwenkt wird. Wird nunmehr der Abschnitt in der Ruhestellung der Brücke unterfangen, so behält er allein aufgrund seines Eigengewichtes seine waagrechte Stellung. Wird nunmehr zur Inbetriebnahme der Brücke der hintere Teil nach unten geschwenkt, so folgt der Abschnitt dieser Bewegung, jedoch trifft er nach einem gewissen Schwenkweg auf die Oberfläche der Rampe und klappt dann selbsttätig mit der weiteren Senkbewegung des hinteren Teils so weit, bis er schliesslich mit dem hinteren Teil fluchtet. Beim Hochschwenken der Brückenplatte behält der vordere Abschnitt seine waagrechte Lage, die er in der senkrechten Endstellung des hinteren Teils nicht verlassen kann, weil der dann unterfangen ist.

Weitere Einzelheiten der Erfindung werden anhand der Zeichnung erläutert, in der ein Ausführungsbeispiel dargestellt ist, das vorzugsweise verwendet werden soll.

Es zeigen:

Fig. 1 eine Überfahrbrücke für Rampen in der Seitenansicht und

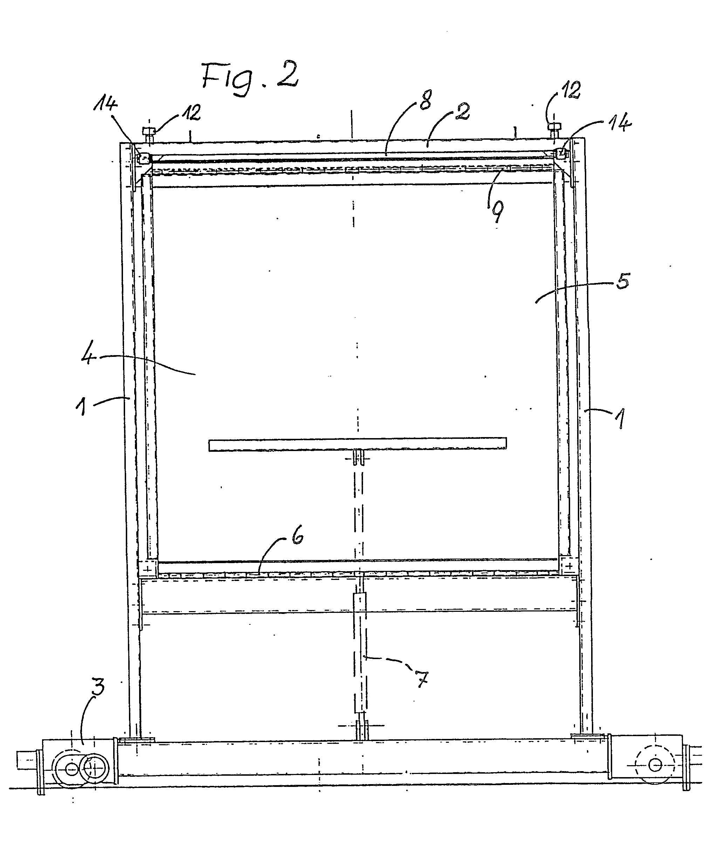

Fig. 2 die Brücke gemäss Fig. 1 in der Ruhestellung, und zwar unter die Brückenplatte gesehen.

Am unteren Ende eines rechteckigen Rahmens mit senkrechten, seitlichen Streben 1 und einer waagrechten Strebe 2 befindet sich ein Laufwerk 3 für die Fortbewegung der Überfahrbrücke auf einer Schiene. Innerhalb dieses Rahmens befindet sich der untere bzw. hintere Teil der Brückenplatte 5, wenn sich die Brücke in der Ruhestellung befindet. Der untere bzw. hintere Teil 4 ist um eine waagrechte Achse 6 schwenkbar, und zwar mit Hilfe eines Arbeitszylinders 7. Am freien Endes des Teils 4 ein vorderer Abschnitt 8 angelenkt, und zwar erfolgt die Anlenkung um eine waagrechte Achse, die mit 9 bezeichnet ist.

In der Ruhestellung der Brückenplatte 5 nimmt der Abschnitt 8 eine waagrechte Stellung ein, um eine lange Brückenplatte 5 in einem vergleichsweise niedrigen Gebäude od. dgl. unterbringen zu können. In dieser Stellung des Abschnittes 8 liegt dieser an einem quer zum Teil 4 sich erstreckenden Widerlager 10 an, das nach unten hin am freien Ende abgewinkelt ist. Diese Abwinkelung ist mit 11 bezeichnet.

Um ein Abkippen des Rahmens zu vermeiden, ist die Strebe 2 oben mit Laufrollen 12 versehen, die in nicht dargestellten Schienen geführt sind.

Der Abschnitt 8 liegt frei auf dem Widerlager 10 auf, wenn sich der Teil 4 in der Ruhestellung, also in der senkrechten Stellung befindet. Soll jedoch nun die Brücke in die Wirkstellung, also in die etwa waagrechte Stellung verschwenkt werden im Sinne des Pfeiles 13, so behält der Abschnitt 8 aufgrund seines Eigengewichtes seine Stellung so lange, bis die vorne am Abschnitt 8 befindlichen Laufrollen 14 die Oberfläche 16 der Rampe 17 berühren. Damit beginnt die Ausklappbewegung des Abschnittes 8. Dieses Ausklappen ist beendet, wenn die Abwinkelung 11 auf der Oberfläche 16 aufstösst und hier ihr Widerlager findet.

Der Überfahrbetrieb kann nunmehr ausgeübt werden; so kann die Brücke benutzt werden, um vor der Rampe 17 befindliche Eisenbahnschienen zu überbrücken, wenn z.B. Eisenbahnwagen von der Stirnseite aus beschickt oder entladen werden sollen.

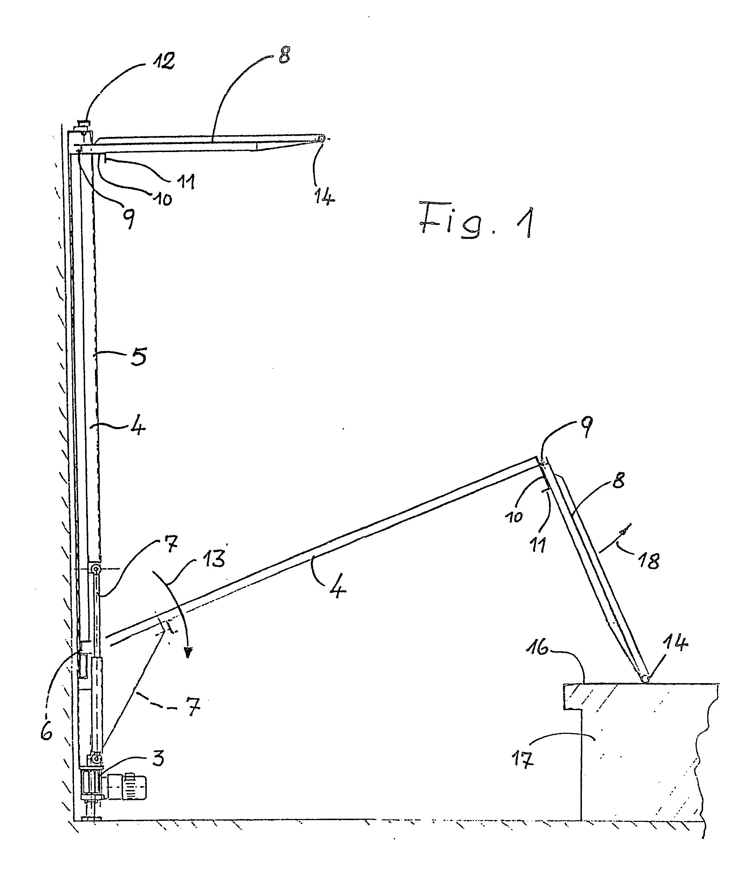

Soll die Überfahrbrücke eingezogen, also in die Stellung gemäss Fig. 1 zurückgeschwenkt werden, so erfolgt ein Anheben des unteren bzw. hinteren Teils 4 unter Mitnahme des Abschnittes 8, der sich aufrichtet und schliesslich aufgrund des Widerlagers 10 eine Stellung einnimmt, die rechtwinklig zum Teil 4 verläuft. Diese Stellung behält der Abschnitt 8 aufgrund seines Eigengewichtes, bis Teil 4 seine senkrechte Ruhestellung eingenommen hat.

Der Abschnitt 8 ist also frei verschwenkbar an dem Teil 4 gelagert; allerdings wird er durch das Widerlager 10 daran gehindert, eine Stellung einzunehmen, in der er eine Winkelstellung in bezug auf Teil 4 einnimmt, die kleiner ist als 90°. Das Gelenk mit der Achse 9 lässt also insoweit eine freie Verschwenkung des Abschnittes 8 zu. Dennoch kann dieses Gelenk so ausgebildet sein, dass es in der Wirkstellung der Brückenplatte 5 eine Bewegung im Sinne des Pfeiles 18 unterbindet, wenn der Abschnitt 8 über die durch den Teil 4 bestimmte Ebene hinaus nach oben verschwenkt werden sollte bzw. der Versuch unternommen werden sollte, eine solche Verschwenkung zu bewirken. Im Regelfalle kann dieses Gelenk ohne die für diese Begrenzung erforderlichen Anschläge ausgestattet sein. Es ist dann möglich, den Abschnitt 8 vom Widerlager 10 aus rückwärts um etwa 270° nach hinten zu schwenken, um den Abschnitt 8 z.B. auf Teil 4 aufzulegen, sollte hierzu der Wunsch bestehen.

Demgemäss ist auch festzustellen, dass sich der Abschnitt 8 stets selbsttätig verschwenkt und auch in der Ruhe hält, und zwar aufgrund des Eigengewichtes des Abschnittes 8. Wichtig ist ferner, dass der Anlenkpunkt des Teiles 4 bzw. die Höhenstellung der Achse 6 so gewählt sein müssen, und zwar bei ausreichender Länge des Teiles 4, dass beim Auftreffen des Abschnittes 8 auf die Oberfläche 16 der Abschnitt 8 mit dieser Fläche einen Winkel einschliesst, der kleiner ist als 90°. So ist sichergestellt, dass ein Ausklappen des Abschnittes 10 bei einer weiteren Senkbewegung des Teils 4 eintreten kann, wobei auch die Laufrollen 14 von Bedeutung sind.

**Patentansprüche**

1. Überfahrbrücke für Rampen mit einer um eine waagrechte Achse (6) verschwenkbaren Brückenplatte (5), deren vorderer Abschnitt (8) gegenüber dem hinteren, an der Rampe angelenkten Teil (4) um eine waagrechte Achse (9) verschwenkbar ist, wobei der hintere Teil der Brückenplatte in der Ruhestellung der Brücke etwa senkrecht steht und der Abschnitt etwa waagrecht angeordnet ist und wobei ferner in der Wirkstellung der Brücke der Abschnitt und der hintere Teil fluchten und die Brückenplatte insgesamt im wesentlichen waagrecht verläuft, dadurch gekennzeichnet, dass der vordere Abschnitt (8) frei schwenkbar am hinteren Teil (4) gelagert und in der Ruhestellung der Brücke durch ein Widerlager (10) unterfangen ist.

2. Brücke nach Anspruch 1, dadurch gekennzeichnet, dass der vordere Abschnitt (8) vom Widerlager (10) zumindest um etwa 90° frei verschwenkbar ist.

3. Brücke nach Anspruch 1, dadurch gekennzeichnet, dass der vordere Abschnitt (8) am freien Ende roll- oder gleitfähig ausgebildet ist.

4. Brücke nach Anspruch 2, dadurch gekennzeichnet, dass der vordere Abschnitt (8) um etwa 270° frei verschwenkbar ist.

5. Brücke nach Anspruch 1, dadurch gekennzeichnet, dass am freien Ende des hinteren Teils (4) eine Stütze zum Abstützen auf der Oberfläche der Rampe angeordnet ist.

6. Brücke nach Anspruch 1 und 5, dadurch gekennzeichnet, dass die Stütze das Widerlager (10) ist.

7. Brücke nach Anspruch 1, dadurch gekennzeichnet, dass die Anlenkstelle und die Länge des hinteren Teils (4) so angeordnet bzw. so ausgeführt sind, dass beim Absenken des hinteren Teils (4) und dem damit sich ergebenden Auftreffen des Abschnitts (8) auf der Rampenoberfläche der Abschnitt mit dieser Fläche einen Winkel bildet, der kleiner ist als 90°.

8. Brücke nach Anspruch 1, dadurch gekennzeichnet, dass der Abschnitt (8) lediglich aufgrund seines Eigengewichtes am Widerlager (10) anliegt.

9. Brücke nach Anspruch 1 zur Überbrückung von Gleiströgen und zum Abstützen mit dem vorderen Ende auf der Rampenoberfläche.

10. Brücke nach Anspruch 9, dadurch gekennzeichnet, dass sie mit einem Fahrwerk ausgestattet und in Richtung der Schienen des Gleistroges verfahrbar ist.

**Claims**

1. Loading bridge for ramps, having a bridge plate (5) which is pivotable about a horizontal axis (6), the front section (8) of which bridge plate is pivotable about a horizontal axis (9) relative to the rear portion (4) which is pivotally mounted on the ramp, wherein, in the inoperative position of the bridge, the rear portion of the bridge plate extends substantially vertically and the front section is disposed substantially horizontally, and additionally wherein, in the operative position of the bridge, the front section and the rear portion are in alignment and the bridge plate as a whole extends substantially horizontally, characterised in that the front section (8) is mounted on the rear portion (4) in a freely pivotable manner and is supported by an abutment (10) in the inoperable position of the bridge.

2. Bridge according to claim 1, characterised in that the front section (8) from the abutment (10) is freely pivotable at least through approximately 90°.

3. Bridge according to claim 1, characterised in that the free end of the front section (8) is adapted to be rollable or slidable.

4. Bridge according to claim 2, characterised in that the front section (8) is freely pivotable through substantially 270°.

5. Bridge according to claim 1, characterised in that a support is disposed at the free end of the rear portion (4) for providing support on the surface of the ramp.

6. Bridge according to claim 1 and 5, characterised in that the support is the abutment (10).

7. Bridge according to claim 1, characterised in that the pivotal mounting is so disposed and the length of the rear portion (4) is so selected that, when the rear portion (4) is lowered and the front section (8) thereby encounters the ramp surface, the front section forms with this surface an angle which is less than 90°.

8. Bridge according to claim 1, characterised in that the front section (8) abuts against the abutment (10) merely due to its own weight.

9. Bridge according to claim 1 for spanning track troughs and for providing support with the front end on the ramp surface.

10. Bridge according to claim 9, characterised in that it is provided with an undercarriage and is transportable in the direction of the rails of the track trough.

**Revendications**

1. Passerelle de transbordement pour rampes, comprenant un tablier (5) qui peut basculer autour d'un axe (6) horizontal, dont la section avant (8) peut basculer autour d'un axe (9) horizontal par rapport à la partie arrière (4) articulée à la rampe, la partie arrière du tablier étant, en la position de repos de la passerelle, à peu près verticale et la section à peu près horizontale, alors qu'en outre, en la position de fonctionnement de la passerelle, la section et la partie arrière sont alignées et le tablier s'étend dans l'ensemble sensiblement horizontalement, caractérisée en ce que la section avant (8) est montée basculante librement sur la partie arrière (4) et, en la position de repos de la passerelle, est soutenue par une butée (10).

2. Passerelle suivant la revendiaction 1, caractérisée en ce que la section avant (8) peut basculer librement d'au moins 90° environ à partir de la butée (10).

3. Passerelle suivant la revendication 1, caractérisée en ce que l'extrémité libre de la section avant (8) est constituée de manière à pouvoir rouler ou à pouvoir glisser.

4. Passerelle suivant la revendication 2, caractérisée en ce que la section avant (8) peut basculer librement de 270° environ.

5. Passerelle suivant la revendication 1, caractérisée en ce qu'un étai d'appui sur la surface de la rampe est monté à l'extrémité libre de la partie arrière (4).

6. Passerelle suivant la revendication 1 ou 5, caractérisée en ce que l'étai est la butée (10).

7. Passerelle suivant la revendication 1, caractérisée en ce que le point d'articulation et la longueur de la partie arrière (4) sont disposés ou sont agencés de façon que, lorsque la partie arrière (4) s'abaisse et la section (8) s'applique ainsi à la surface de la rampe, la section fait avec cette surface un angle qui est inférieur à 90°.

8. Passerelle suivant la revendication 1, caractérisée en ce que la section (8) s'applique simplement, sous l'effet de son propre poids, sur la butée (10).

9. Passerelle suivant la revendication 1, destinée à passer au-dessus de traverses de chemin de fer et à s'appuyer, par l'extrémité antérieure, sur la surface de la rampe.

10. Passerelle suivant la revendiaction 9, caractérisée en ce qu'elle est munie d'un chariot et peut être déplacée dans la direction des rails de la traverse de chemin de fer.

Fig. 1

Fig. 2